Europäisches Patentamt

European Patent Office

Office européen des brevets

(11) Veröffentlichungsnummer: **0 253 315
B1**

# EUROPÄISCHE PATENTSCHRIFT

(45) Veröffentlichungstag der Patentschrift:
**22.11.90**

(51) Int. Cl.⁵: **B01D 25/12**

(21) Anmeldenummer: **87109934.7**

(22) Anmeldetag: **09.07.87**

(54) Filterpresse.

(30) Priorität: **11.07.86 DE 3623476**

(43) Veröffentlichungstag der Anmeldung:
**20.01.88 Patentblatt 88/3**

(45) Bekanntmachung des Hinweises auf die Patenterteilung:
**22.11.90 Patentblatt 90/47**

(84) Benannte Vertragsstaaten:
**AT BE CH DE FR GB IT LI LU NL SE**

(56) Entgegenhaltungen:
**DE-C- 38 843
FR-A- 1 430 991
FR-A- 2 164 961
GB-A- 2 059 277
US-A- 3 633 747**

**Die Akte enthält technische Angaben, die nach dem
Eingang der Anmeldung eingereicht wurden und die
nicht in dieser Patentschrift enthalten sind.**

(73) Patentinhaber: **F.H. Schule GmbH, Hammer Deich 70,
D-2000 Hamburg 26(DE)**

(72) Erfinder: **Berg, Manfred, Lutterothstr. 69,
D-2000 Hamburg 20(DE)**
Erfinder: **Vick, Walter, Groenlaender Damm 6,
D 2000 Hamburg 73(DE)**
Erfinder: **Hansen, Niels, Spannwisch 11,
D-2000 Hamburg 72(DE)**

(74) Vertreter: **Glawe, Delfs, Moll & Partner Patentanwälte,
Postfach 26 01 62 Liebherrstrasse 20,
D-8000 München 26(DE)**

ACTORUM AG

## Beschreibung

Die Erfindung bezieht sich auf eine Filterpresse mit durch Druckluft beaufschlagbaren Membranplatten, in welcher jeder Platte eine gesonderte vom Schließzustand der Presse abhängige Entlüftungseinrichtung zugeordnet ist.

Bei herkömmlichen Filterpressen muß das Filtrationsverfahren andauern, bis der zwischen den Filtertüchern zweier Platten eingeschlossene Raum von dem Filterkuchen mit der angestrebten maximalen Restfeuchte gefüllt ist. Da die Durchsatzgeschwindigkeit mit zunehmender Dicke des Filterkuchens stark abnimmt, kann ein hoher Zeitaufwand für den letzten Abschnitt der Filtrationsperiode erforderlich sein. Bei neueren Pressen, die mit Membranplatten ausgerüstet sind, braucht die Filtration nicht bis zur Erreichung der angestrebten Restfeuchte anzudauern; vielmehr kann das Verfahren schon bei wesentlich höheren Restfeuchten abgebrochen werden, wobei die noch enthaltene Feuchte durch Zusammenpressen der Membranen durch Druckbeaufschlagung der Platten ausgetrieben wird.

Üblicherweise wird als Druckmedium zur Beaufschlagung der Membranplatten Luft mit einem Druck zwischen etwa 4 und 12 bar verwendet. Das hat den Nachteil, daß dann, wenn die Presse aufgrund eines Funktions- oder Bedienungsfehlers nicht vollständig geschlossen oder der Schließdruck unzureichend ist, es zu einem explosionsartigen Platzen von Membranen kommen kann. Solchen gefährlichen Unfällen versucht man dadurch vorzubeugen, daß man im hydraulischen Schließsystem einen Druckwächter vorsieht, der die Druckluftbeaufschlagung verhindert bzw. das Druckluftversorgungssystem entlüftet, wenn der Schließdruck nicht ausreicht. Jedoch hat sich gezeigt, daß diese Sicherungsmaßnahme nicht ausreicht. Beispielsweise ist es vorgekommen, daß bei Reparaturen der elektrischen Anlage aus Unkenntnis des Wartungspersonals Probeschaltungen vorgenommen wurden, die zu einer gefährlichen Operation der Anlage führten. Zu ähnlichen Ergebnissen kann eine Beschädigung der Steueranlage führen. Schließlich ist auch nicht ausgeschlossen, daß der Druckwächter im hydraulischen System einen höheren Druck anzeigt, als er im Druckzylinder herrscht, oder daß ein etwaiger Druckabfall im Druckzylinder mit zu starker Verzögerung vom Druckwächter wahrgenommen wird. – Schließlich hat sich auch gezeigt, daß die bekannten Sicherungseinrichtungen im Falle eines raschen Druckabfalls in der Schließhydraulik nicht hinreichen, weil das in der Druckluftversorgungsanlage und in den Platten gespeicherte Druckluftvolumen so groß ist, daß der Druck darin selbst bei ordnungsmäßigem Funktionieren der Sicherungseinrichtungen nicht schnell genug abgebaut wird.

Es ist ferner eine Filterpresse bekannt (FR-A 2 167 961), in welcher jede Filterplatte einen mit zwei Bohrungen versehenen Ansatz aufweist; wenn die Platten im normalen Betriebszustand aneinander anliegen, bilden die miteinander fluchtenden Bohrungen der Ansätze zwei nebeneinanderliegende Leitungen, von denen die erste für die Zuleitung der zu filtrierenden Flüssigkeit und die zweite für die Zufuhr der Druckluft dient. Wenn die Platten deutlichen Abstand voneinander aufweisen, sind diese Leitungen zwischen ihnen offen, so daß die zugeführte Druckluft entweichen kann. Undichtigkeit kann beispielsweise als Folge von Verschmutzungen durch zu filtrierende Flüssigkeit oder durch Toleranzfehler sowie durch Verformungen der Ansätze erfolgen. Ist der irreguläre Abstand aber nur gering, weil beispielsweise der Schließdruck nur wenig abgefallen ist oder der Schließdruckabfall gerade erst beginnt, so kann es den Fall geben, daß eine Schnellentlüftung der Platten nicht eintritt, weil die zwischen den Ansätzen vorgesehenen elastischen Dichtungen den Abstand überbrücken, oder weil wegen Randverschmutzungen der Bohrungen und Unsymmetrien im Plattenpaket die Druckluft zunächst nur örtlich entweichen kann.

Der Erfindung liegt daher die Aufgabe zugrunde, eine Filterpresse der eingangs genannten Art zu schaffen, die größere Sicherheit bietet.

Die erfindungsgemäße Lösung besteht darin, daß die Entlüftungseinrichtung als Schnellentlüftungsorgan mit einem Verschlußglied ausgebildet ist, das durch den Druck im hydraulischen Schließsystem und/oder durch die Lage der Filterplatten oder durch ein diesen Größen abgeleitetes Signal steuerbar ist.

Dieses Schnellentlüftungsorgan ermöglicht – vorzugsweise unabhängig vom Druckluftversorgungssystem – eine rasche Entleerung jeder Platte bzw. einzelner gefährdeter Platten mit hoher Geschwindigkeit durch einen großen Entlüftungsquerschnitt. Selbst dann, wenn ein nicht ordnungsgemäßer Zustand der Presse plötzlich auftritt, wenn die Membranen mit Druckluft beaufschlagt sind, kann die Entleerung der Platte bzw. einzelner Platten rascher erfolgen als das Öffnen der Presse, so daß ein Unfall mit an Sicherheit grenzender Wahrscheinlichkeit ausgeschlossen werden kann.

Beispielsweise kann die Länge des geschlossenen Plattenstapels oder der Abstand der Platten voneinander mittels eines Fühlers abgegriffen werden, der die Schnellentlüftung veranlaßt, wenn diese Größen nicht innerhalb eines vorbestimmten Bereichs liegen.

Nach einem besonderen Merkmal der Erfindung ist das Schnellentlüftungsorgan von einem mit der Filterplatte verbundenen Schnellentlüftungsventil gebildet, das gemeinsam mit gleichartigen Schnellentlüftungsventilen der anderen Filterplatten einer pneumatischen Steuerleitung angeschlossen ist, die über ein vom Schließzustand der Presse abhängiges Schnellentlüftungsventil an eine Druckluftquelle angeschlossen ist. Im ordnungsgemäßen Schließzustand werden sämtliche Schnellentlüftungsventile durch den auf sie einwirkenden Steuerdruck, der von der Druckluftversorgungsanlage herrühren kann, im Schließzustand gehalten. Wenn ein unregelmäßiger Zustand auftritt, der durch das oben angegebene Stellsignal angezeigt wird, so braucht dieses Stellsignal nicht sämtlichen Entlüftungsventilen zugeführt zu werden, was aufwendig und fehleranfällig sein könnte; sondern es genügt, das in der Steuerleitung enthaltene Schnellentlüftungsventil in die Entlüftungsstellung zu bringen, wodurch sämtliche den Filterplatten zugeordneten Schnellentlüftungsventile geöffnet werden. Die Verwendung eines besonderen Schnellentlüftungsventils in der Steuerleitung statt eines normalen Steuerventils hat den Vorteil, daß dank des größeren Entlüftungsquerschnitts des Schnellentlüftungsventils die Steuerleitung rascher geleert und daher die den Platten zugeordneten Schnellentlüftungsventile rascher angesteuert werden. Während übliche Steuerventile auf eine Vielzahl von Schaltspielen mit relativ kleinen Strömungsquerschnitten ausgelegt sind, sind die in der Technik bekannten Schnellentlüftungsventile mit einem großen Entlüftungsquerschnitt ausgestattet, ohne für eine Vielzahl von Steurspielen geeignet sein zu müsen.

Bei einer weiteren vorteilhaften Ausführungsform der Erfindung ist vorgesehen, daß das durch Federkraft oder Luftdruck in die Öffnungsstellung gedrängte Schnellentlüftungsorgan einen Betätigungsstößel aufweist, der durch eine benachbarte Filterplatte in deren Schließstellung in seiner der Schließstellung des Schnellentlüftungsorgans zugeordneten Lage gehalten ist. Dadurch ist sichergestellt, daß das Schnellentlüftungsorgan stets geschlossen bleibt, wenn die dem Schnellentlüftungsorgan zugeordnete Platte und die benachbarte Platte in dem vorgesehenen geringen Schließabstand aneinander anschließen. Wenn der Abstand jedoch größer ist, was auf einen Fehler hindeutet und ein Platzen der zwischen den beiden Platten befindlichen Membranen zur Folge haben könnte, hält der Betätigungsstößel das Schnellentlüftungsorgan nicht in der Schließstellung, so daß die betreffende Platte entlüftet wird bzw. sich ein Luftdruck in der betreffenden Platte gar nicht erst aufbauen kann.

Zweckmäßig kann schließlich auch eine solche Ausführung der Erfindung sein, bei der ein Verschlußteil des Schnellentlüftungsorgans durch einen mit der benachbarten Filterplatte verbundenen oder zusammenwirkenden Riegelteil in der Schließstellung gehalten ist.

Die Erfindung wird im folgenden näher unter Bezugnahme auf die Zeichnung erläutert, die ein vorteilhaftes Ausführungsbeispiel schematisch veranschaulicht. Es zeigt:

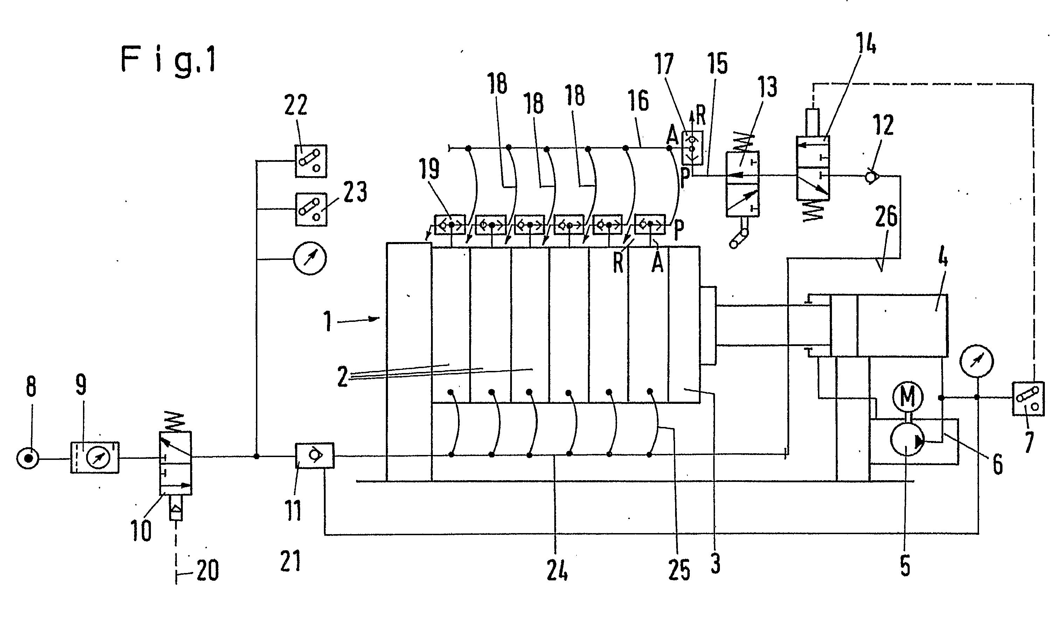

Fig. 1 ein Filterpressenschema mit Be- und Entlüftungssystem.

Die Filterpresse (1) umfaßt ein Paket von Filterplatten (2), die geschlossen gehalten werden durch die auf das Endstück (3) wirkende Kolbenzylindereinrichtung (4), die zu diesem Zweck mit einem hydraulischen Druck von mehreren hundert Atmosphären beaufschlagt wird. Das hydraulische System umfaßt eine Pumpe (5), eine Hochdruckleitung (6) und einen an diese angeschlossenen Druckschalter (7), der beim Erreichen eines eingestellten Maximaldrucks den Pumpenmotor abschaltet und bei Absenkung auf einen eingestellten Minimaldruck ihn wieder einschaltet.

Das Druckluftsystem zur Versorgung der Filterplatten mit dem zum Membranpressen erforderlichen Luftdruck umfaßt eine Druckluftquelle (8), eine Wartungseinheit (9) mit Filter und Reduzierventil, ein Magnetventil (10), ein hydraulisch entsperrbares Rückschlagventil (11) sowie eine Versorgungsleitung (24), von der Zweigleitungen (25) zu den einzelnen Platten (2) führen.

Das Ventil (10) hat außer der Sperrstellung eine Durchgangsstellung, die es dann einnimmt, wenn es über eine Steuerleitung (20) den Einschaltimpuls für das Membranpressen erhält, sowie eine Entlüftungs-Ruhestellung, die es zeitgesteuert nach Ablauf einer vorbestimmten Zeitperiode nach dem Einschalten wieder einnimmt. In der Entlüftungsstellung dient es im Normalbetrieb zum Entlüften des Druckluftsystems. Dies vollzieht sich zwecks Schonung der Apparatur langsam, während mehrerer Minuten.

Das hydraulisch entsperrbare Ventil (11) ist über eine Steuerleitung (21) an die Hochdruckseite des hydraulischen Schließsystems angeschlossen. Es öffnet sich erst dann, wenn der Schließdruck die vorgesehene Mindesthöhe erreicht hat. Im Normalfall wird dadurch ausgeschlossen, daß eine Druckluftzufuhr erfolgen kann, wenn das Plattenpaket nicht mit dem notwendigen Schließdruck geschlossen ist.

Zwischen den Ventilen (10) und (11) ist an das Druckluftsystem ein Paar von Kontaktmanometern (22, 23) angeschlossen, die sicherstellen, daß das Membranpressen innerhalb einer vorherbestimmten Druckspanne erfolgt.

Das Schnellentlüftungssystem der Anlage umfaßt eine Druckluftleitung (26), die von der Versorgungsleitung (24) ausgeht und ein Rückschlagventil (12), ein elektrisch betätigbares Wegeventil (14) und ein mechanisch steuerbares Wegeventil (13) umfaßt. Über die Leitung (15) führt sie zu einem Schnellentlüftungsventil (17), an das eine Steuerleitung (16) angeschlossen ist, die über Zweigleitungen (18) mit den Schnellentlüftungsventilen (19) der einzelnen Filterplatten (2) verbunden ist.

Das elektrisch betätigbare Wegeventil (14) ist über die gestrichelt angedeutete Steuerleitung an den Druckschalter (7) des hydraulischen Schließsystems angeschlossen, um von diesem ein Stellsignal zu erhalten. Zeigt der Druckschalter an, daß der hydraulische Schließdruck sich in der erforderlichen Höhe zwischen den oben genannten Höchst- und Mindestwerten befindet, ist es auf Durchgang geschaltet. Bleibt das elektrische Steuersignal aus, so schaltet es um auf Entlüftung. Dadurch werden die anschließenden Leitungen entlüftet, das Schnellentlüftungsventil (17) wird geöffnet und entlüftet die Leitungen (16) und (18), so daß auch die Schnellentlüftungsventile an den Platten geöffnet werden.

Das mechanisch betätigbare Ventil (13) ist so angeordnet, daß es abhängig von der Lage des Endstücks (3) der Filterpresse ist. Wenn dies sich in der vorgesehenen Schließlage befindet, ist das Ventil auf Durchgang geschaltet. Bewegt sich das Endstück aus der Schließlage heraus, so schaltet das Ventil um auf Entlüftung, so daß dann ebenfalls die nachfolgenden Leitungen entlüftet und die Schnellentlüftungsventile (17) bzw. (19) geöffnet werden.

Bei normaler Funktion erhält das Magnetventil (10) bei Betätigung eines Einschalttasters Spannung und schaltet auf Druckluftzufuhr, deren Druck mittels der Kontaktmanometer (22, 23) geregelt wird. Die Zufuhr der Druckluft zu dem weiteren System findet dann statt, wenn das Ventil (11) nach Feststellung eines ausreichenden Schließdrucks im hydraulischen System geöffnet ist. Außerdem schaltet das Magnetventil (14) bei Erreichen des maximalen Schließdrucks auf Durchgang. Wenn das Plattenpaket mechanisch richtig geschlossen ist, gelangt die Druckluft in die Membranplatten. Nach der für die Einschaltung des Ventils (10) vorbestimmten Zeit, die die Dauer des Membranpressens festlegt, schaltet dieses Ventil auf Entlüften um. Der Druck im System sinkt dann langsam wieder. Das Öffnen der Presse ist wegen der Wechselwirkung zwischen dem hydraulischen und dem Druckluftsystem nur dann möglich, wenn das Druckluftsystem vollständig entlüftet ist.

Wenn aufgrund eines Fehlers im hydraulischen Schließsystem darin ein nicht erforderlicher Druck erreicht wird, bleibt das Ventil (11) gesperrt.

Wenn während des Membranpressens der Schließdruck aufgrund eines Fehlers oder einer Fehlbedienung abfällt, so zeigt der Druckschalter (7) das Unterschreiten des Minimaldrucks an; das Steuersignal für das Ventil (14) bleibt daraufhin aus, so daß dieses auf Entlüften schaltet. Infolge geringen Abstands zwischen diesem Ventil und dem Schnellentlüftungsventil (17) reagiert dies rasch auf den in der Leitung (15) abfallenden Druck, öffnet und entlüftet auf diese Weise die Steuerleitung (16) rasch. Daraufhin öffnen auch die Schnellentlüftungsventile (19) in den Zweigleitungen und sorgen für eine rasche Entlüftung der Membranplatten.

Die dafür erforderliche Steuerungs- und Entlüftungszeit kann auf wenige Sekunden begrenzt werden. Andererseits findet ein etwaiger Druckabfall im hydraulischen System im allgemeinen verzögert statt infolge des begrenzten Querschnitts der vom Zylinder (4) abführenden Leitungen und der Viskosität der Hydraulikflüssigkeit, so daß die Entlüftung des Druckluftsystems im allgemeinen rascher stattfinden wird als die Absenkung des Drucks im Zylinder (4) auf einen Wert, bei dem die Schließkraft unter die von der Druckluftbeaufschlagung der Platten erzeugte Gegenkraft absinkt. Sollte dies dennoch geschehen, so öffnet sich das Plattenpaket unter dem in den Platten herrschenden Luftdruck dennoch nur langsam gegen den Druck des aus dem Zylinder (4) verzögert abfließenden Hydraulikmediums. Dies ist solange unschädlich als der Öffnungsspalt zwischen benachbarten Platten wenige Millimeter nicht überschreitet. Erst bei größeren Öffnungsdistanzen bestet die Gefahr des Platzens der Membrane. Wenn man bedenkt, daß eine durchschnittliche Filterpresse eine Plattenzahl in der Größenordnung 100 hat und wenn man pro Platte eine Öffnungsdistanz von 1 bis 2 mm zulassen will, so erhält man einen zulässigen Kolbenhub von 0,1 bis 0,2 m. Selbst unter ungünstigen Umständen vollzieht sich dieser Hub innerhalb mindestens mehrerer Sekunden. Das Sicherheitsentlüftungssystem läßt sich so bemessen, daß diese Zeitspanne größer ist als die zur Entlüftung erforderliche.

Es sind Fehler denkbar, bei denen ein Absinken des Schließdrucks im Zylinder (4) vom Druckschalter (7) nicht an das Ventil (14) weitergegeben wird. In diesen Fällen schaltet das mechanisch vom Endstück (3) betätigte Ventil (13) auf Entlüften, und es folgt die soeben beschriebene Sicherheitsentlüftung des Systems.

## Patentansprüche

1. Filterpresse (1) mit durch Druckluft beaufschlagbaren Membranplatten (2), in welcher jeder Platte (2) eine gesonderte, vom Schließzustand der Presse abhängige Entlüftungseinrichtung (19) zugeordnet ist, dadurch gekennzeichnet, daß die Entlüftungseinrichtung als Schnellentlüftungsorgan (19) mit einem Verschlußglied ausgebildet ist, das durch den Druck im hydraulischen Schließsystem und/oder durch die Lage der Filterplatten (2) oder durch ein von diesen Größen abgeleitetes Signal steuerbar ist.

2. Filterpresse nach Anspruch 1, dadurch gekennzeichnet, daß das Schnellentlüftungsorgan von einem mit der Filterplatte (2) verbundenen Schnellentlüftungsventil (19) gebildet ist, das gemeinsam mit den Schnellentlüftungsventilen (19) der anderen Filterplatten (2) an eine pneumatische Steuerleitung (18, 16) angeschlossen ist, die über ein vom Schließzustand der Presse abhängiges Schnellentlüftungsventil (17) an eine Druckluftquelle angeschlossen ist.

3. Filterpresse nach Anspruch 1 oder 2, dadurch gekennzeichnet, dass das durch Federkraft oder Luftdruck in die Öffnungsstellung gedrängte Schnellentlüftungsorgan einen Betätigungsstößel aufweist, der durch eine benachbarte Filterplatte in deren Schließstellung in seiner der Schließstellung des Schnellentlüftungsorgans zugeordneten Lage gehalten ist.

4. Filterpresse nach Anspruch 1 oder 2, dadurch gekennzeichnet, daß · ein Verschlußteil des Schnellentlüftungsorgans durch einen mit der benachbarten Filterplatte verbundenen oder zusammenwirkenden Riegelteil in der Schließstellung gehalten ist.

## Claims

1. Filter press (1) with membrane plates (2), which can be acted upon by compressed air, in which press a separate ventilating device (19), which is dependent on the closed state of the press, is associated with each plate (2), characterised in that the ventilating device is formed as a quick-acting ventilating element (19) with a shutter member, which can be controlled by the pressure in the hydraulic closing system and/or by the position of the filter plates (2) or by a signal which is derived from these values.

2. Filter press according to claim 1, characterised in that the quick-acting ventilating element is formed by a quick-acting vent valve (19), which is connected to the filter plate (2) and which, together with the quick-acting vent valves (19) of the other filter plates (2), is attached to a pneumatic control line (18, 16), which is attached to a compressd air source via a quick-acting vent valve (17), which is dependent on the closed state of the press.

3. Filter press according to claim 1 or 2, characterised in that the quick-acting ventilating element, which is urged into the open position by spring tension or air pressure, comprises an actuating tappet, which is held in its position which is associated with the closed position of the quick-acting ventilating element by an adjacent filter plate in its closed position.

4. Filter press according to claim 1 or 2, characterised in that a shutter part of the quick-acting ventilating element is held in the closed position by a locking part which is connected to or cooperates with the adjacent filter plate.

## Revenications

1. Filtre-press (1) équipé de plateaux à membrane (2) sur lesquels de l'air comprimé peut être envoyé, dans lequel il est adjoint, à chaque plateau (2), un dispositif séparé d'évacuation d'air (19) dont le fonctionnement est subordonné à l'état de fermeture de la presse, caractérisé en ce que le dispositif d'évacuation d'air est réalisé sous forme d'organe d'échappement rapide (19) muni d'un élément obturateur qui peut être commandé par la pression dans le système de fermeture hydraulique et/ou par la position des plateaux filtrants (2) ou par un signal dérivé de ces grandeurs.

2. Filtre-presse selon la revendication 1, caractérisé en ce que l'organe d'échappement rapide est constitué par une valve d'échappement rapide (19) qui est raccordée au plateau filtrant (2) et qui est reliée, en commun avec les valves d'échappement rapide (19) des autres plateaux filtrants (2), à une conduite de commande pneumatique (18, 16) qui est raccordée à une source d'air comprimé par l'intermédiaire d'une valve d'échappement rapide (17) subordonnée à l'état de fermeture de la presse.

3. Filtre-presse selon la revendication 1 ou 2, caractérisé en ce que l'organe d'échappement rapide, sollicité dans sa position d'ouverture par la force d'un ressort ou par de l'air comprimé, comporte une tige-poussoir d'actionnement qui est maintenue dans sa position correspondant à la position de fermeture de l'organe d'échappement rapide par un plateau filtrant voisin occupant sa position de fermeture.

4. Filtre-presse selon la revendication 1 ou 2, caractérisé en ce qu'un élément obturateur de l'organe d'échappement rapide est maintenu dans sa position de fermeture par un élément de verrouillage raccordé au plateau filtrant voisin ou coopérant avec celui-ci.

Fig.1

EP 0 253 315 B1